# EUROPÄISCHE PATENTSCHRIFT

(11) **EP 1 397 274 B1**
(45) Veröffentlichungstag und Bekanntmachung des Hinweises auf die Patenterteilung: **18.01.2006**
(21) Anmeldenummer: 02735416.6
(22) Anmeldetag: 13.06.2002
(51) Int. Cl.: B60R 16/02

(54) **VERFAHREN ZUR FESTLEGUNG VON ZEITPUNKT UND UMFANG VON WARTUNGSVORGÄNGEN**
METHOD FOR DETERMINING THE TIME AND EXTENT OF MAINTENANCE OPERATIONS
PROCEDE DE DETERMINATION DU MOMENT ET DE L'ETENDUE D'INTERVENTIONS D'ENTRETIEN

(30) Priorität: 19.06.2001 DE 10129457
(43) Veröffentlichungstag der Anmeldung: 17.03.2004
(73) Patentinhaber: DaimlerChrysler AG, 70567 Stuttgart (DE)
(72) Erfinder: HÖFLACHER, Robert, 70378 Stuttgart (DE); KAUFMANN, Rainer, 70191 Stuttgart (DE); KOSTELEZKY, Walter, 73760 Ostfildern (DE); LAY, Kurt, 72108 Rottenburg (DE); REIGER, Rupert, 85521 Ottobrunn (DE)
(86) Internationale Anmeldenummer: PCT/EP2002/006479
(87) Internationale Veröffentlichungsnummer: WO 2002/102627

(56) Entgegenhaltungen:
- EP-A- 0 661 673
- DE-A- 19 812 318
- GB-A- 2 127 554
- US-A- 4 525 782
- US-A- 4 884 054

## Beschreibung

Die Erfindung bezieht sich auf ein Verfahren zur Festlegung von Zeitpunkt und Umfang von Wartungsvorgängen für ein System mit mehreren Wartungspositionen, von denen jede innerhalb eines zugehörigen flexiblen Wartungsintervalls und Toleranzbereiches durchgeführt werden sollte, wobei ein minimaler Wartungsabstand zwischen aufeinanderfolgenden Wartungsvorgängen vorgegeben wird.

Derartige Verfahren sind beispielsweise zur Wartung von Kraftfahrzeugen allgemein gebräuchlich. Herkömmlicherweise werden bei dieser Anwendung feste Wartungsabstände in Form entsprechender Zeit- oder Fahrleistungsabstände vorgegeben. Außerdem wird meist fest vorgegeben, welche Wartungspositionen beim jeweiligen Wartungsvorgang durchzuführen sind. Bei dieser Art der vordefinierten Wartung von Kraftfahrzeugen wird die jeweilige Fahrzeugkomponente in festen Abständen unabhängig davon gewartet, wie stark ihr tatsächlicher Verschleiß ist, der von Fahrzeug zu Fahrzeug z.B. aufgrund unterschiedlicher Fahrweisen merklich verschieden sein kann.

In der Offenlegungsschrift DE 31 10 774 A1 ist ein Verfahren zur Festlegung von Wartungszeitpunkten für Kraftfahrzeuge offenbart, bei dem eine Führungsgröße, z.B. der Bremsbelagzustand oder Motorölzustand, als maßgeblich festgesetzt, ein zugehöriger Wartungswert der Führungsgröße vorgegeben und im laufenden Fahrzeugbetrieb der Istwert der Führungsgröße laufend erfasst und mit dem Wartungswert verglichen wird. Sobald der Istwert den Wartungswert erreicht, wird angezeigt, dass ein Wartungsvorgang durchgeführt werden sollte. Für weitere verschleißabhängig zu wartende Betriebsgrößen, wie Kupplung, Vergasereinstellung, Zündkerzen, Zündzeitpunkte und Batteriespannung, werden ebenfalls von Zeit zu Zeit deren Istwerte erfasst und mit abgespeicherten Verschleißgrenzwerten verglichen, um dann je nach Verschleißzustand die jeweilige Betriebsgröße einem durch die Führungsgröße bestimmten Wartungsvorgang innerhalb eines Toleranzbereiches zuzuordnen, der abhängig von der Kilometerleistung, dem Benzinverbrauch, der Zeit oder einer Kombination dieser Größen gebildet wird. Dabei erfolgt die Festlegung des Wartungszeitpunkts innerhalb des Toleranzbereiches in Richtung auf die obere oder untere Bereichsgrenze anhand einer Bewertung der Führungsgröße sowie der jeweiligen Betriebsgröße. Von einer verfahrensdurchführenden Recheneinheit kann zudem bei angenommen gleichbleibender Fahrzeugbeanspruchung die Verschleißgrenze extrapoliert werden. Zu den für die Fahrzeugbeanspruchung maßgeblichen Betriebsgrößenwerten kann ein Lastdiagramm erstellt werden, aus dem erkannt wird, ob überwiegend im Teil- oder Volllastbetrieb gefahren wird.

In der Offenlegungsschrift DE 32 34 727 A1 ist ein Verfahren zur Festlegung von Wartungszeitpunkten für ein Kraftfahrzeug offenbart, bei dem der aktuelle Verschleiß von zu wartenden Komponenten und die Betriebsdauer oder Fahrleistung des Fahrzeugs, die Motordrehzahl und die Kühlwassertemperatur gemessen werden und der aktuelle Verschleiß mit einem vorgebbaren Verschleißgrenzwert verglichen wird, um daraus die zu erwartende Lebensdauer der betreffenden Komponente zu errechnen. Es wird dann die geringste Zeitdauer oder Wegstrecke angezeigt, bei der innerhalb eines vorgebbaren maximalen Toleranzbereiches mehrere überwachte Komponenten verschlissen werden, oder es wird die Wegstrecke für eine Komponente angezeigt, die um mehr als dem vorgegebenen Toleranzbereich vor den anderen Komponenten verschlissen ist.

Der Erfindung liegt als technisches Problem die Bereitstellung eines Verfahrens der eingangs genannten Art zugrunde, mit dem sich Zeitpunkt und Umfang von Wartungsvorgängen für ein System mit mehreren Wartungspositionen vergleichsweise zuverlässig, flexibel und kostengünstig festlegen lassen.

Die Erfindung löst dieses Problem durch die Bereitstellung eines Verfahrens mit den Merkmalen des Anspruchs 1. Bei diesem Verfahren werden zum einen ein minimaler Wartungsabstand für einen jeweils nächsten Wartungsvorgang, d.h. Folgewartungsvorgang, und zum anderen flexible Wartungsintervalle und Toleranzbereiche für die Wartungspositionen vorgegeben, wobei der Wartungsabstand variabel und die Wartungsintervalle und Toleranzbereiche für die Wartungspositionen unterschiedlich vorgegeben werden können. Zur Optimierung kann über diesen variablen Wartungsabstand iteriert werden. Des weiteren wird wenigstens ein Teil aller Wartungspositionen als wartungszeitpunktrelevante Wartungspositionen behandelt, nachfolgend auch als Leitfunktions-Wartungspositionen bezeichnet, die für die Festlegung der Wartungszeitpunkte berücksichtigt werden. Speziell wird dabei der Zeitpunkt für einen jeweiligen Folgewartungsvorgang, der mindestens um den minimalen Wartungsabstand nach dem vorhergehenden Wartungsvorgang liegt, spätestens auf denjenigen Toleranzbereich-Endpunkt der wartungszeitpunktrelevanten Wartungspositionen prognostisch festgelegt, der unter Einhaltung des minimalen Wartungsabstands am frühesten auf den vorhergehenden Wartungsvorgang folgt. Alle Wartungspositionen, deren Toleranzbereich-Endpunkt vor diesem prognostizierten, angestrebten Folgewartungszeitpunkt liegen, werden in den Umfang des vorhergehenden Wartungsvorgangs einbezogen.

Diese Vorgehensweise erlaubt eine ausreichend rechtzeitige und damit zuverlässige Wartung verschleißbehafteter Komponenten in sehr flexibler Weise durch feste oder variable Vorgabe des minimalen Wartungsabstands und der für jede Wartungsposition individuell wählbaren Wartungsintervalle und Toleranzbereiche. Dabei werden die Wartungsintervalle und Toleranzbereiche abhängig von den aktuellen Gegebenheiten, insbesondere dem aktuellen gemessenen Verschleiß des oder der von der jeweiligen Wartungsposition betroffenen Systemkomponenten, variabel gewählt, was eine weiter verbesserte Anpassung der aufeinanderfolgenden Wartungsvorgänge an den tatsächlichen Verschleißzustand der diversen Systemkomponenten ermöglicht. Im Anwendungsfall von Kraftfahrzeugen kann dadurch unterschiedlicher Verschleiß je nach Fahrweise beim Auffinden günstiger Wartungszeitpunkte berücksichtigt werden.

Mit dem erfindungsgemäßen Verfahren wird somit einerseits gewährleistet, dass jede Wartungsposition ausreichend häufig durchgeführt wird, damit verschlissene Systemkomponenten rechtzeitig gewartet werden, und andererseits durch die Wahl eines entsprechend großen minimalen Wartungsabstandes vermieden, dass Wartungsvorgänge zu häufig erfolgen.

Ein nach Anspruch 2 weitergebildetes Verfahren beinhaltet eine Aufgliederung der Wartungspositionen jeweils in eine oder mehrere Unterwartungspositionen, und beim Erstellen des Ablaufs eines Wartungsvorgangs werden die Unterwartungspositionen der im Wartungsvorgang abzuarbeitenden Wartungspositionen auf Kombinierbarkeit geprüft. Dies ermöglicht einen effektiven Wartungsablauf, bei dem die Unterwartungspositionen zur Abarbeitung derart zusammengestellt werden, dass jede möglichst nur einmal durchgeführt werden muss.

In einer vorteilhaften Weiterbildung der Erfindung nach Anspruch 3 findet ein Optimierungsalgorithmus Verwendung, bei dem der Wartungsaufwand als zu optimierende sogenannte Kostenfunktion dient. Der Wartungsaufwand kann dabei z.B. als bestimmter Geld- bzw. Kostenbetrag beziffert sein.

Hierbei können Wartungspositionen mit Leitfunktion verwendet werden, die vom Optimierungs-Algorithmus zur Bestimmung des Wartungszeitpunktes herausgezogen werden, während andere den Wartungspaketen dann lediglich hinzugefügt werden. Eine Berücksichtigung fester Termine, wie für TÜV, ASU und außerplanmäßige Werkstattaufenthalte, ist möglich. Der Optimierungsvorgang beinhaltet des weiteren ein testweises Vorziehen von Folgewartungspositionen, d.h. von Wartungspositionen, die gemäß der normalen Verfahrenskriterien erst zu einem Folgewartungszeitpunkt fällig wären, zu einem vorhergehenden Wartungsvorgang, wobei der jeweils vorgegebene, einzuhaltende minimale Wartungsabstand als Nebenbedingung der Optimierung fungiert. Mit dieser Maßnahme kann festgestellt werden, ob ein vorzeitiges Durchführen einer oder mehrerer Wartungspositionen insgesamt zu einem geringeren Wartungsaufwand führt und daher empfehlenswert ist.

In der Praxis kann der Verschleiß von zu wartenden Komponenten Zeit- oder Distanzintervallen unterliegen sowie aus Lastkollektiven bzw. aus Sensordaten errechnet werden. Programmintern wird bevorzugt nur mit einer Einheit (Zeit oder Distanz) gerechnet, das Ergebnis kann dann wieder in beiden Einheiten präsentiert werden. Die Möglichkeit, hierzu verschiedene Modelle zur Verschleißbestimmung einzubinden, stellt ein Rahmenalgorithmus sicher. Dieser ermöglicht es u.a. Verschleißmodelle von Zulieferern einzubinden und zu testen. Aus Praktikabilitätsgründen ist bevorzugt vorgesehen, dass das System manuelle Korrekturen der optimalen Lösung erlaubt, z.B. um weitere suboptimale Lösungen mit zugehörigem Wartungstermin, Wartungsumfang und -kosten sowie Folgewartungstermine und -kosten zu erreichen. Der Nutzer kann so den Zeitraum zwischen zwei Wartungsterminen in einem vernünftigen Bereich vorgeben und eine mehr kosten- bzw. eine mehr zeitoptimierte Gewichtung steuern.

Eine vorteilhafte Ausführungsform der Erfindung ist in den Zeichnungen dargestellt und wird nachfolgend beschrieben. Hierbei zeigen:
- Fig. 1: ein Blockdiagramm einer prinzipiellen Realisierung eines Verfahrens zur optimierten Festlegung von Zeitpunkt und Umfang von Wartungsvorgängen für ein Kraftfahrzeug,
- Fig. 2: eine schematische Zeitstrahl- bzw. Wegstrahl-Darstellung mit verschiedenen Wartungspositionen zur Illustration der verfahrensgemäßen Festlegung der Zeitpunkte für einen anstehenden Wartungsvorgang und einen Folgewartungsvorgang und des Umfangs der anstehenden Wartung,
- Fig. 3: ein Blockdiagramm der genaueren Struktur der Wartungspositionen,
- Fig. 4: eine Darstellung des Prüfvorgangs auf Kombinierbarkeit von Unterwartungspositionen zweier beispielhaft herausgegriffener Wartungspositionen auf der Grundlage der Wartungspositionsstruktur von Fig. 3,
- Fig. 5: eine schematische Darstellung eines Optimierungsvorgangs für das Festlegen des Umfangs für einen jeweiligen Wartungsvorgang mit testweisem Vorziehen von Wartungspositionen,
- Fig. 6: ein schematisches Flussdiagramm des Verfahrens,
- Fig. 7: eine grafische Bedienoberfläche eines Arbeitspositions-Editors des Verfahrens,
- Fig. 8: eine grafische Bedienoberfläche eines Arbeitsschritt-Editors des Verfahrens,
- Fig. 9 bis 11: eine prozentuale, zeitbezogene bzw. fahrleistungsbezogene grafische Anzeige des Zustands von Wartungspositionen,
- Fig. 12: eine grafische Bedien- und Anzeigeoberfläche zur manuellen Vorgabe eines minimalen Wartungsabstands und Anzeige von Resultaten des Optimierungsvorgangs und der Wartungspaketbildung,
- Fig. 13: und 14 grafische Anzeigen des Optimierungsergebnisses durch Iteration über minimale Wartungsabstände.

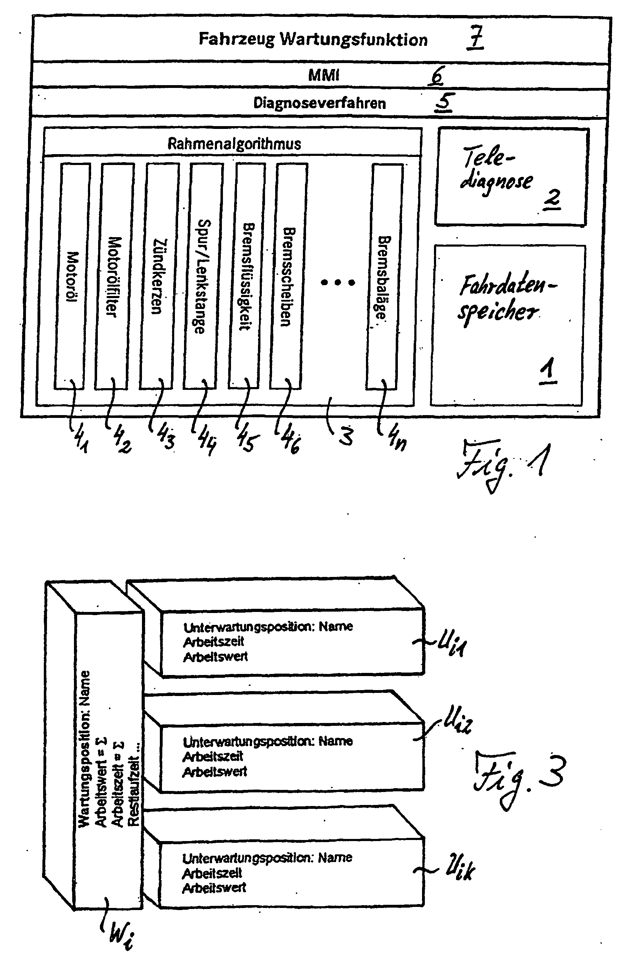

Fig. 1 veranschaulicht die prinzipielle Umsetzung eines vorteilhaften Verfahrensbeispiels, das sich zur optimierten Festlegung von Zeitpunkt und Umfang von Wartungsvorgängen für Kraftfahrzeuge im Rahmen einer Fahrzeugwartungsfunktion 7 eignet. Wie aus Fig. 1 zu erkennen, ist dazu ein Diagnosealgorithmus 5 für das Gesamtfahrzeug vorgesehen, der auf drei Module zugreifen kann, und zwar auf einen Fahrdatenspeicher 1, auf Ergebnisse einer Telediagnose 2, die dem verfahrensdurchführenden System mitgeteilt werden, und auf einen Rahmenalgorithmus 3, der Modelle 4₁,...,4ₙ (n>1) zum prädiktiven Diagnostizieren des Verschleißes einer Mehrzahl n von zu wartenden Fahrzeugkomponenten, wie Motoröl, Motorölfilter, Zündkerzen, Spur/Längsstange, Bremsflüssigkeit, Bremsscheiben und Bremsbeläge, aufweist. Die verschiedenen Wartungspositionsmodelle 4₁,...,4ₙ können in an sich herkömmlicher und daher hier nicht weiter zu erläuternder Art von entsprechenden Sensoren, einfacheren Algorithmen, oder komplexeren, z.B. auf der Basis von Lastkollektiven arbeitenden Verschleißbestimmungsalgorithmen gebildet sein, die jeweils ihre gemessenen bzw. berechneten Ergebnisse an den Rahmenalgorithmus 3 abliefern. Die Diagnoseverfahrensebene 5 steht über eine übliche Mensch-Maschine-Schnittstelle (MMI) 6 mit der Fahrzeugwartungsfunktion 7 in Verbindung, um Benutzereingaben zu ermöglichen und die erzielten Resultate dem Benutzer anzuzeigen.

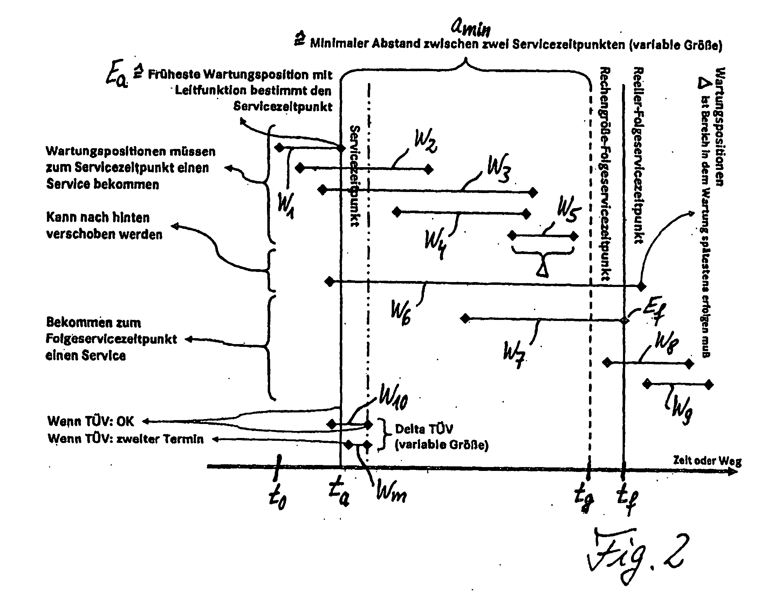

Fig. 2 veranschaulicht in einer Zeitstrahl- oder Wegstrahl-Darstellung das grundsätzliche verfahrensgemäße Prinzip der Festlegung von Zeitpunkt und Umfang der aufeinanderfolgenden Wartungsvorgänge. Wie bei Kraftfahrzeugen üblich, gibt es zur Wartung der fahrzeugseitigen, verschleißbehafteten Komponenten eine Vielzahl m von Wartungspositionen W₁, ..., Wₘ (m>1). Diesen ist jeweils ein Wartungsintervall mit individuell festlegbarer Toleranzbreite Δ, wie in Fig. 2 stellvertretend für eine Wartungsposition W₅ gezeichnet, zugeordnet, innerhalb dem die betreffende Wartungsposition durchgeführt werden sollte. Von allen Wartungspositionen W₁,...,Wₘ wird wenigstens ein Teil als jeweilige Leitfunktions-Wartungsposition ausgewählt, die für die Festlegung der Wartungszeitpunkte Leitfunktion haben, d.h. als relevant berücksichtigt werden. Die jeweilige Toleranzbreite Δ kann das kleinste gemeinsame Intervall sein.

Ausgehend von einem aktuellen Zeitpunkt t₀ wird dann als Zeitpunkt tₐ für einen nächsten, anstehenden Wartungsvorgang derjenige Toleranzbereich-Endpunkt Eₐ aller Toleranzbereich-Endpunkte von Leitfunktions-Wartungspositionen herangezogen, der zuerst auf den aktuellen Zeitpunkt t₀ folgt. Des weiteren wird ein minimaler Wartungsabstand aₘᵢₙ zwischen je zwei aufeinanderfolgenden Wartungsvorgängen vorzugsweise variabel vom System oder vom Benutzer vorgegeben. Der um diesen minimalen Wartungsabstand aₘᵢₙ später als der Zeitpunkt tₐ für den anstehenden Wartungsvorgang liegende Zeitpunkt t_{g} bildet dann den frühestmöglichen Zeitpunkt für einen nächsten Wartungsvorgang, d.h. einen Folgewartungsvorgang. Letzterer wird ausgehend von diesem Zeitpunkt t_{g} vorzugsweise noch so viel wie möglich in Richtung spät verschoben, um Wartungsaufwand einzusparen. Als spätestmöglicher Folgewartungszeitpunkt t_{f} wird dann derjenige Toleranzbereich-Endpunkt E_{f} festgelegt, der von allen Toleranzbereich-Endpunkten der Leitfunktions-Wartungspositionen dem frühestmöglichen Folgewartungszeitpunkt t_{g} als erstes folgt bzw. diesem entspricht. Dieser spätestmögliche Folgewartungszeitpunkt t_{f} wird als prognostizierter, wünschenswerter Zeitpunkt des Folgewartungsvorgangs festgelegt.

Als Umfang für den anstehenden Wartungsvorgang wird dann die Durchführung mindestens all jener Wartungspositionen festgelegt, deren Toleranzbereich-Endpunkte vor dem geplanten Folgewartungszeitpunkt t_{f} liegen, im Beispiel von Fig. 2 sind dies insbesondere die Wartungspositionen W₁ bis W₅. Wartungspositionen, deren Toleranzbereich-Endpunkt auf oder nach dem geplanten Folgewartungszeitpunkt t_{f} liegt, können in den Umfang des nächsten oder eines späteren Folgewartungsvorgangs einbezogen werden, im Beispiel von Fig. 2 sind dies die Wartungspositionen W₆ bis W₉. Letzteres gilt auch für Wartungspositionen, deren Toleranzbereich den gesamten Bereich zwischen dem anstehenden Wartungszeitpunkt tₐ und dem geplanten Folgewartungszeitpunkt t_{f} umfasst, wie im Fall der Wartungsposition W₆ von Fig. 2.

Eine Sonderbehandlung kann für bestimmte Sonder-Wartungspositionen vorgesehen sein, die beispielsweise durch gesetzliche Vorschriften bestimmt sind, wie TÜV-Überwachung und Abgassonderüberwachung (ASU). Wenn eine solche Sonder-Wartungsposition diejenige ist, die einen Wartungszeitpunkt nach den oben erläuterten Regeln bestimmt, werden als Normalfall andere Wartungspositionen auf den entsprechenden Zeitpunkt der Sonder-Wartungsposition vorgezogen, d.h. spätestens auf den Zeitpunkt des Toleranzbereich-Endpunktes der Sonder-Wartungsposition, wenn ein solcher für die Sonder-Wartungsposition existiert. Wenn die den normalen Wartungszeitpunkt bestimmende Wartungsposition keine Sonder-Wartungsposition ist, wird überprüft, ob sich letztere unter den auf den nächsten Wartungsvorgang vorgezogenen Wartungspositionen befindet. In diesem Fall erhält die Sonder-Wartungsposition eine Eigenbehandlung. Der Toleranzbereich "Delta TÜV", in welchem z.B. die TÜV-Untersuchung erfolgen soll, ist in der Regel klein, da ein Vorziehen derselben vom Benutzer wegen des damit verbundenen Aufwandes normalerweise nicht gewünscht wird. Wenn daher der Toleranzbereich der jeweiligen Sonder-Wartungsposition nicht mit dem wie oben erläutert bestimmten Wartungszeitpunkt überlappt, weist als Sonderbehandlung das Verfahren der Sonder-Wartungsposition einen eigenen, separaten Wartungstermin möglichst am Ende von dessen Toleranzbereich zu, wie in Fig. 2 mit der strichpunktierten Linie angedeutet.

Fig. 3 veranschaulicht die typische, vorliegend verwendete Wartungspositionsstruktur. Jede Wartungsposition Wᵢ ist aus einer oder mehreren Unterwartungspositionen Uᵢ₁, Uᵢ₂..., Uᵢₖ aufgebaut, die jeweils einen bestimmten Wartungsarbeitsschritt repräsentieren. So kann z.B. eine Wartungsposition "Bremsbelag wechseln" aus den drei Unterwartungspositionen "Bremse öffnen", "Bremsbeläge wechseln" und "Bremse schließen" bestehen.
Den Unterwartungspositionen Uᵢ₁,...,Uᵢₖ und damit auch der jeweiligen Wartungsposition Wᵢ sind wartungsbezogene Parameter zugeordnet, wie die zur Durchführung benötigte Arbeitszeit und der damit verbundene Arbeitswert, d.h. die dadurch verursachten Kosten. Ein Parameter Restlaufzeit gibt an, wie lange voraussichtlich noch mit der Durchführung der Wartungsposition Wᵢ abgewartet werden kann.

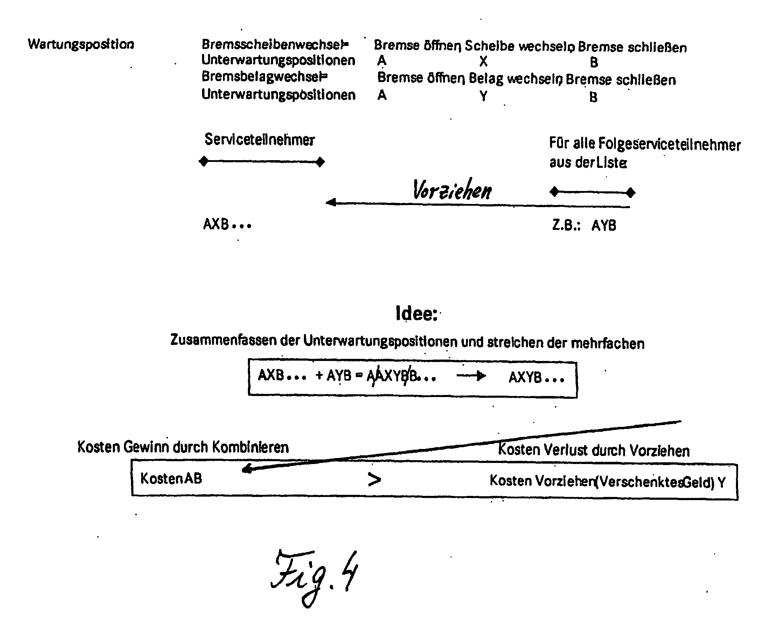

Diese Wartungspositionsstruktur wird verfahrensgemäß dazu genutzt, bei der Festlegung des Umfangs und Ablaufs eines jeweiligen Wartungsvorgangs die beteiligten, durchzuführenden Wartungspositionen daraufhin zu untersuchen, ob und inwieweit sie gemeinsame Unterwartungspositionen enthalten und so kombinierbar sind, dass eine in mehreren Wartungspositionen auftretende Unterwartungsposition möglichst nur einmal ausgeführt werden braucht. Fig. 4 veranschaulicht diese Maßnahme am Beispiel einer ersten Wartungsposition "Bremsbelag wechseln", die aus den Unterwartungspositionen "Bremse öffnen" (A), "Bremsbeläge wechseln" (X) und "Bremse schließen" (B) besteht, und einer zweiten Wartungsposition "Bremsscheibe wechseln", die aus den Unterwartungspositionen "Bremse öffnen", "Bremsscheibe wechseln" (Y) und "Bremse schließen" besteht. Gleichzeitig wird anhand dieses Beispiels der Fall illustriert, dass der Bremsbelagwechsel mit seiner Arbeitsabfolge AYB der Unterwartungspositionen an sich erst während eines Folgewartungsvorgangs durchgeführt werden müsste, jedoch innerhalb eines nachfolgend näher erläuterten Optimierungsvorgangs testweise zu einem anstehenden Wartungsvorgang vorgezogen wird, der den Bremsscheibenwechsel mit seiner Abfolge AXB der Unterwartungspositionen enthält. Dabei steht der Begriff "Service" in Fig. 4 als Synonym für den Begriff "Wartungsvorgang".

Gemäß der Idee der Kombinierbarkeitsprüfung werden die Unterwartungspakete AXB, AYB, ... der im jeweiligen Wartungsvorgang durchzuführenden Wartungspositionen so weit wie möglich kombinatorisch zusammengefasst, wonach Mehrfachnennungen gleicher Unterwartungspositionen gestrichen werden, d.h. der nicht kombinierte Arbeitsablauf AXB+AYB kann zum kombinierten Ablauf AXYB vereinfacht werden. Der durch den Wegfall von Mehrfachausführungen von Unterwartungspositionen erzielbare Kostengewinn der Optimierung kann je nach Situation den Kostenverlust übersteigen, der mit dem Vorziehen von Wartungspositionen verbunden ist, so dass ein solches Vorziehen in bestimmten Fällen insgesamt von Vorteil sein kann.

Die für den Optimierungsprozess verwendete Kostenfunktion kann insbesondere ein bestimmter Geld- oder Rechnungsbetrag sein, der mit dem jeweiligen Wartungsarbeitsschritt verknüpft ist. Der Kostenverlust durch Vorziehen ergibt sich durch das Verschenken der geschätzten Restlaufzeit der Wartungsposition, z.B. gemessen von 100% bis 0% bezogen auf die Wartungspositionskosten, die hierfür auf Unterwartungspositionsebene vorgegeben werden, wie oben zu Fig. 3 erwähnt. Die Gesamtwartungskosten für einen Wartungsvorgang bestimmen sich dann einfach als Summe der Kosten aller durchzuführenden Unterwartungspositionen und bilden die im Optimierungsprozess zu minimierende Kostenfunktion.

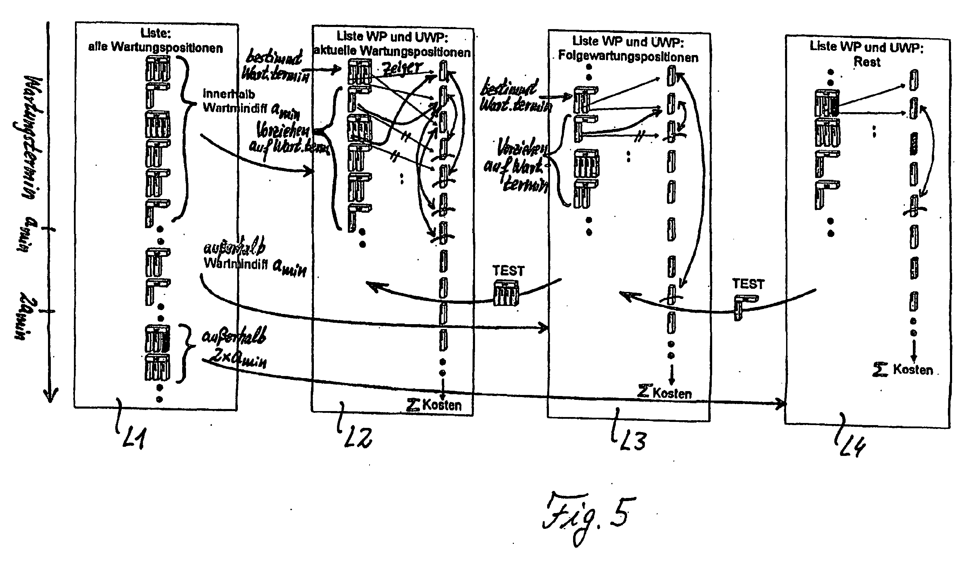

Fig. 5 veranschaulicht den verwendeten Optimierungsprozess. Ausgegangen wird hierbei zunächst von einer kompletten Liste L1 aller Wartungspositionen, einer Liste L2 aller Wartungspositionen, die in einem aktuellen, anstehenden Wartungsvorgang durchzuführen sind, sowie deren Unterwartungspositionen und Listen L3, L4 über die in Folgewartungsvorgängen durchzuführenden Wartungspositionen und deren Unterwartungspositionen. Die anfänglichen Listen L2 bis L4 für den aktuellen Wartungsvorgang und die Folgewartungsvorgänge werden gemäß der oben zu Fig. 2 erläuterten Vorgehensweise erstellt.

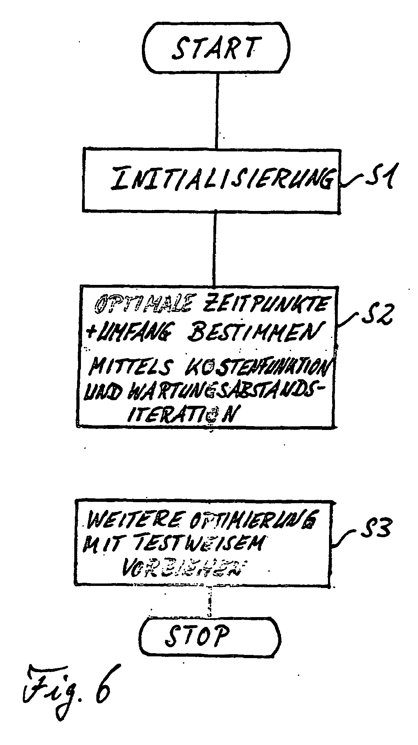

Fig. 6 zeigt das Verfahren in einem schematischen Flussdiagramm. In einer anfänglichen Initialisierungsphase S1 werden die benötigten Anfangsgrößen festgelegt. Dies umfasst eine Initialisierung der Wartungspositionsliste.

Des weiteren erfolgt eine Festlegung des nächsten Wartungszeitpunktes anhand der am frühesten fälligen Leitfunktions-Wartungsposition und eine Anfangszuordnung der Wartungspositionen zum anstehenden Wartungsvorgang und zu Folgewartungsvorgängen gemäß einem ersten Optimierungsprozess (Schritt S2).

Bei dieser Optimierung wird über den minimalen Wartungsabstand aₘᵢₙ iteriert (z.B. in Monatsschritten). Fig. 5 zeigt den Zustand für einen Iterationsschritt, d.h. für einen bestimmten minimalen Wartungsabstandswert aₘᵢₙ. Es erfolgt hierbei die Bestimmung, welche Wartungspositionen in welche Bereiche fallen, die Bildung der Liste der Arbeitsschritte und Streichen der mehrfach auftretenden Schritte, die Berechnung der Kosten und der durch Streichen ersparten Kosten, das Vorziehen der Wartungspositionen auf den jeweiligen Termin und die Errechnung der Verluste durch verschenkte Nutzung.

Danach erfolgt ein zusätzlicher Test, ob Gewinne durch Vorziehen von Wartungspositionen auf frühere Termine Ersparnisse bringen, siehe Schritt S3 von Fig. 6. Bei arbeitsintensiven Wartungspositionen können sich auch hier noch Gewinne ergeben, bevorzugt bei kleinerem minimalen Wartungsabstand aₘᵢₙ.

Die Elemente einer Liste werden solange auf "Vorziehbarkeit" getestet, bis bei einem Durchlauf durch die Liste keine Wartungsposition mehr Gewinn bringt. Wenn sich eine Wartungsposition vorziehen lässt, wird nach dem Ende der Liste wieder neu von oben begonnen, da die schon getesteten dann nach dem Vorziehen einer Wartungsposition möglicherweise mit dieser neuen gut kombinierbar sein könnten.

Die tatsächlichen Kosten für einen festen Wartungsabstand aₘᵢₙ ergeben sich aus der Summe der Arbeitsschrittkosten, siehe Fig. 5, plus der Standkosten, wobei letztere sich aus einem Fixkostenanteil und einem zeitabhängigen Anteil zusammensetzen. Die Zeitdauer eines Wartungstermins errechnet sich aus der Summe der Zeitdauern der Arbeitsschritte, siehe Fig. 5.

Die Summe aus Kostenersparnis durch Kombination von Wartungspositionen einerseits und Standkosten plus verschenktem Geld durch Vorrücken von Wartungspositionen andererseits ist unter der Randbedingung eines vorgegebenen minimalen Abstands zwischen zwei Wartungsterminen die das Optimum bestimmende Größe.

Iteriert man über den minimalen Wartungsabstand aₘᵢₙ (z.B. in Monatsschritten) und trägt obige Größe "pro Zeiteinheit" über den minimalen Wartungsabstand aₘᵢₙ auf, so liefert das Minimum dieser Karte bzw. dieser Kostenfunktion den optimalen Wartungsumfang und mit Hilfe von aₘᵢₙ den optimalen Termin und Umfang einer Folgewartung. Die Größe "pro Zeiteinheit" berücksichtigt z.B. den Fall, dass eine teuere Wartung pro Jahr günstiger sein kann als zwei etwas billigere. Die obige, das Optimum bestimmende Größe ist somit richtigerweise pro Zeiteinheit zu nehmen, d.h. durch aₘᵢₙ zu dividieren.

Wesentlich für eine Kostenfunktion ist die Lage der Extrema, hier der Minima. Addiert man zu der obigen Kostenfunktion den konstanten Wert der Summe von: "Kosten jeder Wartungsposition dividiert durch das jeweilige aktuelle Wartungsintervall dieser Wartungsposition" (das ist die Summe über "Kosten pro Wartungsposition/Zeit"), so bleibt die Lage des absoluten Minimums der Kostenfunktion unverändert, man erhält also das selbe optimale Resultat. Der Funktionswert der Kostenfunktion liefert aber darüber hinaus noch die tatsächlichen Kosten der Wartung für das jeweilige aₘᵢₙ, inkl. Korrekturen für Kombination und Verluste durch Vorziehen und Standzeiten, pro Zeiteinheit.

Ein Wartungsintervall einer Wartungsposition ist dabei nur zum aktuellen Zeitpunkt als konstant anzusehen, da es das Resultat von Lastkollektiven oder Sensorik und somit flexibel sein kann und sich somit wiederum, z.B. durch Änderungen im Fahrverhalten, ändern kann. Das ist die Grundlage der personen- bzw. fahrverhalten-spezifischen Wartung.

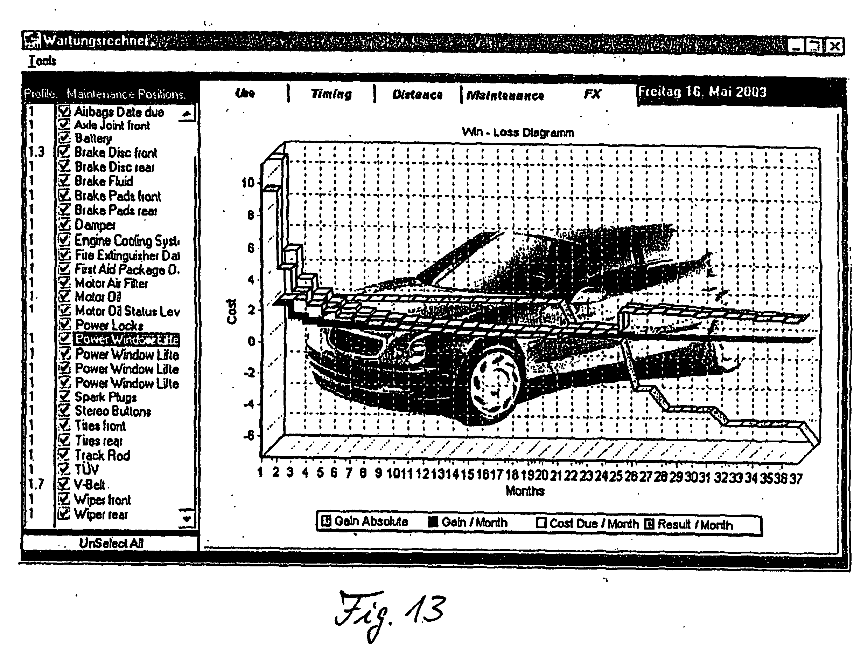

Die Kurve kann neben dem absoluten Minimum weitere relative Minima haben (suboptimale Lösungen des Problems) oder weitere Punkte von Interesse. Dies verlangt nach einer manuellen Eingabemöglichkeit von aₘᵢₙ inklusive der Darstellung von Wartungsumfang, Wartungskosten, Arbeitsschritte usw., siehe Fig. 12.

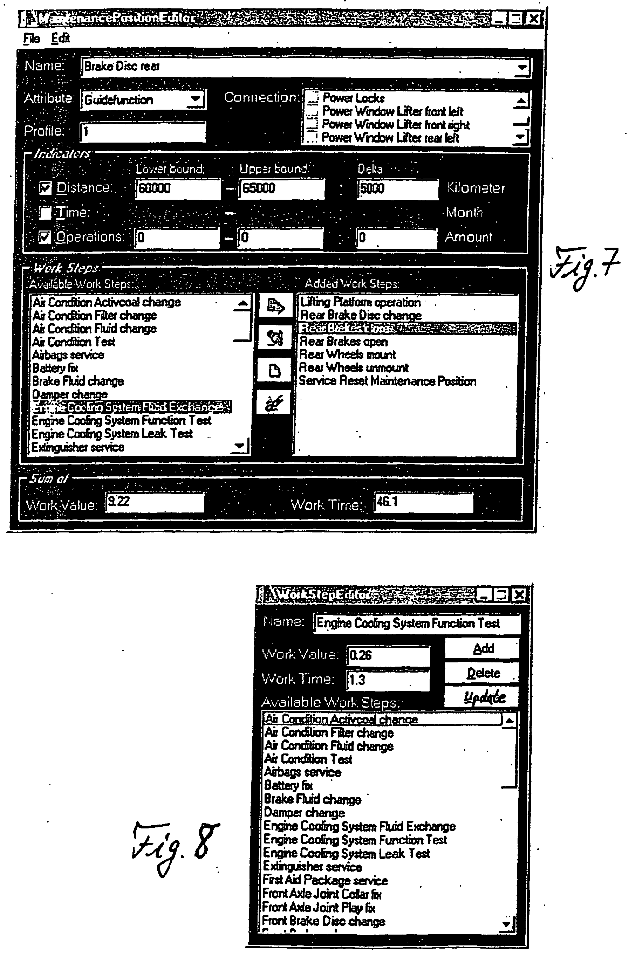

Die Fig. 7 bis 14 veranschaulichen eine Realisierung des Verfahrens unter Verwendung graphischer Bildschirmoberflächen. Fig. 7 zeigt einen Wartungspositionseditor, bei dem beispielhaft die Wartungsposition "hintere Scheibenbremsen" im Menüpunkt "Name" aufgerufen ist. An diesem Menüpunkt ist die vollständige Liste aller erstellten Wartungspositionen hinterlegt. Mit dem Wartungspositionseditor können Wartungspositionen editiert oder neu erstellt werden. Im linken unteren Fenster gelistete Arbeitsschritte können jeder Wartungsposition zugewiesen werden. Das rechte untere Fenster zeigt die der jeweiligen Wartungsposition zugewiesenen Arbeitsschritte. Des weiteren enthält jede Wartungsposition ein Attribut "Leitfunktion", "zusätzliche Wartungsposition" oder "nur Überwachung" sowie die Möglichkeit der Eingabe des Wartungsintervalls und Toleranzbereichs der Wartungsposition in Einheiten der Fahrleistung, der Zeit oder der Anzahl an Operationen. Das jeweilige Wartungsintervall weist eine einstellbare Breite "Delta" auf, innerhalb der die Wartung bei Wartungspositionen mit Leitfunktion durchgeführt werden muß (Toleranzbereich). Eine Option "Verbindung" ("Connection") erlaubt eine Festlegung, ob mit einer Wartungsposition, z.B. Bremsscheiben, immer eine andere mitgemacht werden muß, z.B. Bremsbeläge. Dieser Bezug kann einseitig festgelegt werden, d.h. die Umkehrung muß dann ebenfalls explizit angegeben werden, da sie nicht immer zutrifft.

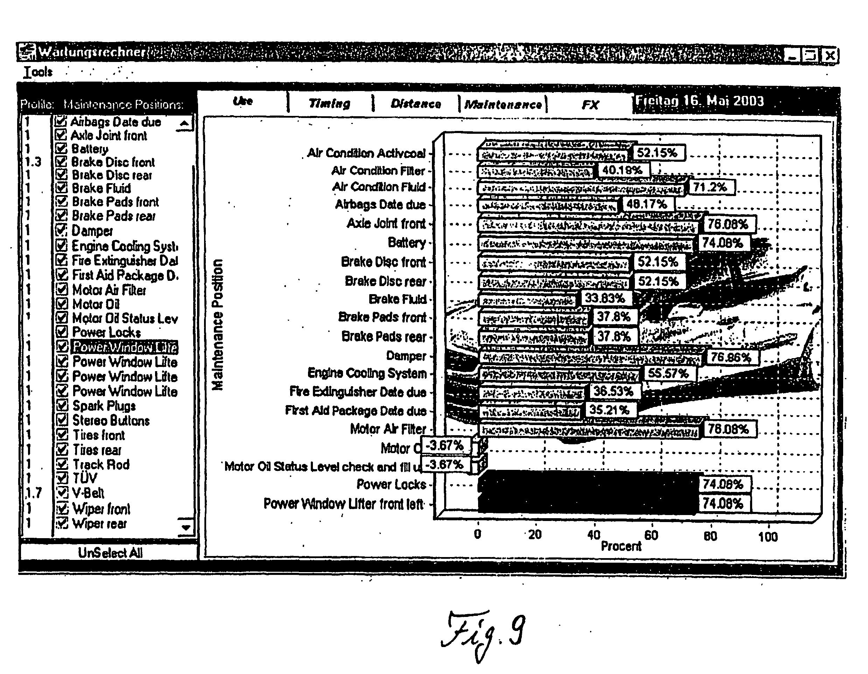

Fig. 8 zeigt einen zugehörigen Unterwartungspositions- bzw. Arbeitsschritteditor. Mit ihm können Unterwartungspositionen editiert und erstellt werden. Jede Unterwartungsposition enthält die Parameter "Arbeitswert", d.h. Kosten, und "Arbeitszeit".

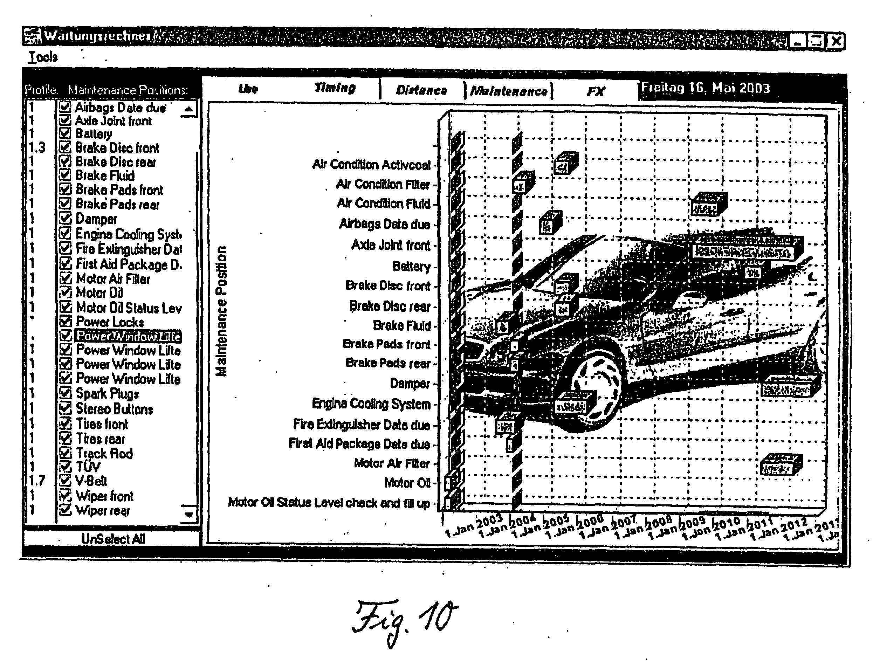

Fig. 9 zeigt in einer Momentaufnahme den aktuellen Abnutzungsgrad jeder selektierten Wartungsposition. Soweit Wartungspositionen noch nicht durch Lastkollektive bzw. Sensorik erfasst sind, ist vorgesehen, eine beschleunigte oder verlangsamte Abnutzung über einen Faktor eines typisierenden bzw. klassifizierenden Fahrer- bzw. Fahrweisenprofils zu erfassen. Umgekehrt kann letzteres aus der sensierten bzw. errechneten Abnutzung ermittelt werden.

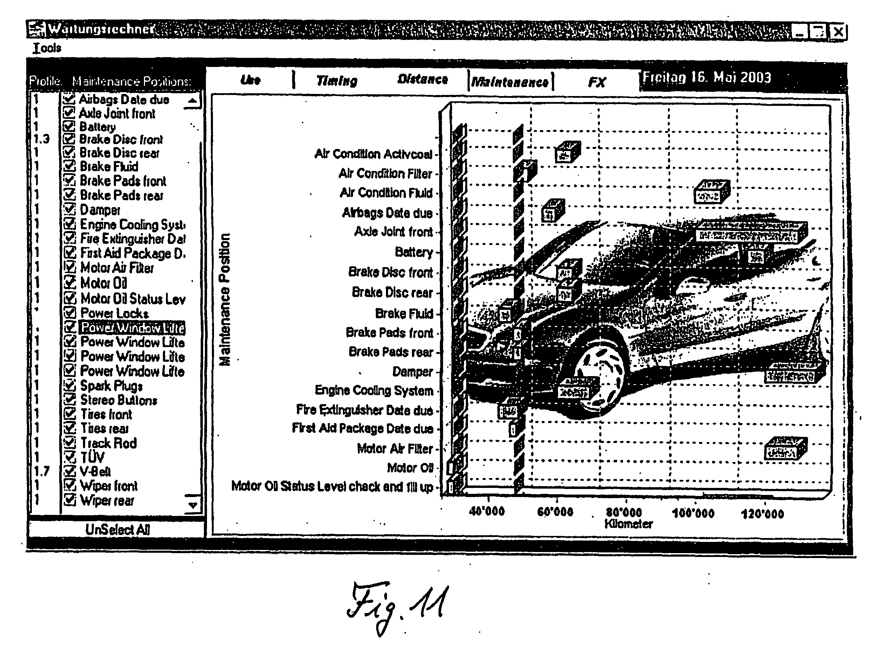

Fig. 10 zeigt eine Bildschirmdarstellung des aktuellen Abnutzungsgrades aller selektierten Wartungspositionen auf einer Zeitachse unter Verwendung der individuellen Abnutzungsgrade und Wartungsintervalle und Toleranzbereiche der Wartungspositionen.

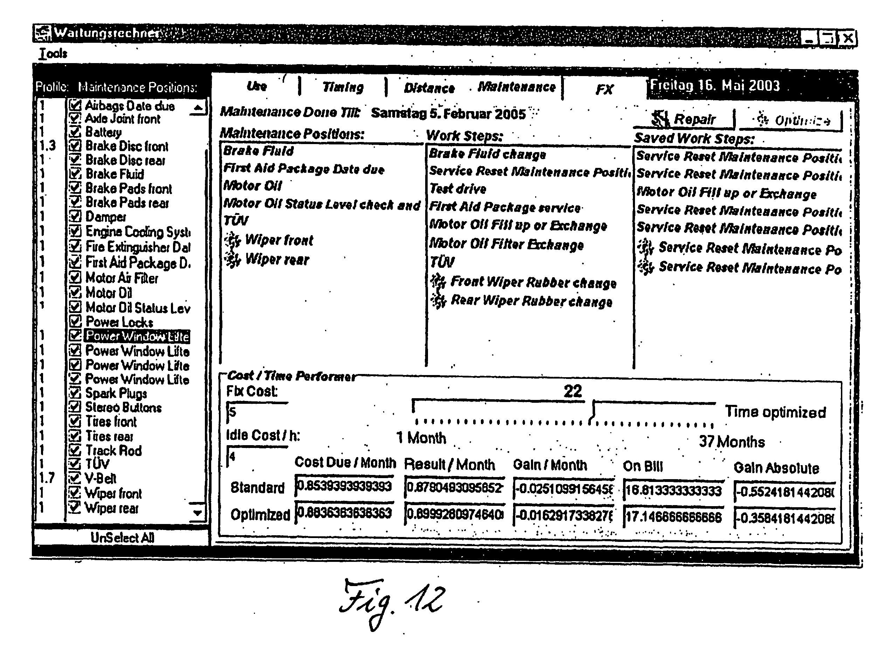

Fig. 11 zeigt eine Bildschirmdarstellung, bei welcher der aktuelle Abnutzungsgrad aller selektierten Wartungspositionen auf die Fahrleistung bzw. die Fahrdistanz unter Verwendung der gemittelten gefahrenen Kilometer pro Zeit umgerechnet ist.

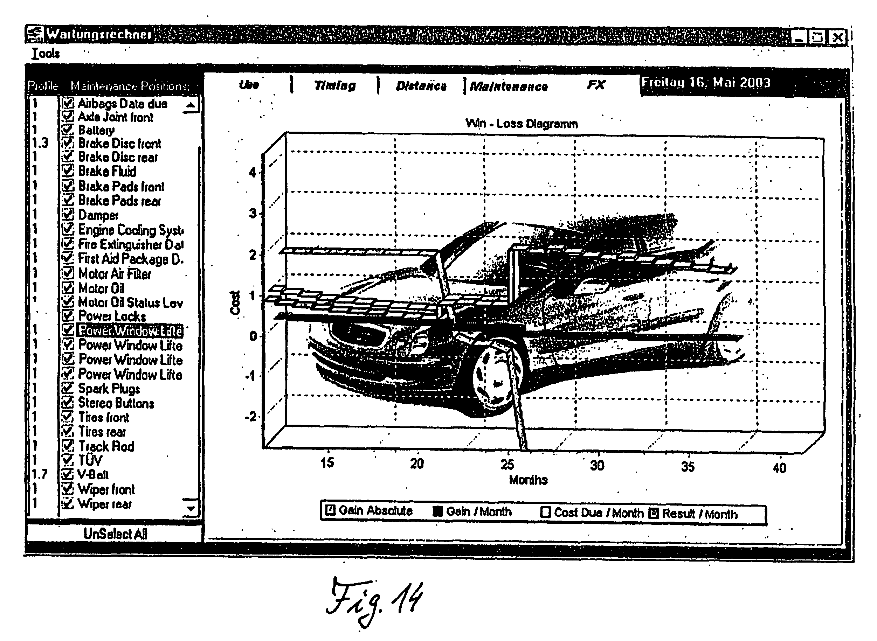

Fig. 12 zeigt das für eine vorgegebene Zeitdistanz zwischen zwei Wartungszeitpunkten optimale Wartungspaket mit den zugehörigen Wartungspositionen, den Arbeitsschritten und den durch Kombination gesparten Arbeitsschritten. Mit der variablen Vorgabe der Zeitdistanz, d.h. dem minimalen Wartungsabstand in Einheiten der Zeit, kann quasi stufenlos zwischen mehr kostenoptimierten Varianten (kleine Zeitdistanzen) oder mehr zeitoptimierten Varianten (große Zeitdistanzen) ausgewählt sowie auch der errechnete optimale Wert von aₘᵢₙ gemäß Fig. 13 und 14 eingestellt werden. Dabei sind Kostengewinne durch Kombination und Kostenverluste durch Vorziehen von Wartungspositionen zur Wartungspaketbildung sowie fixe Standkosten und Standkosten pro Zeit berücksichtigt. Angezeigt werden der Rechnungsbetrag, die Kosten der optimalen Lösung bei gegebenem minimalem Wartungsabstand pro Monat und zum Vergleich die Kosten bei Durchführung jedes Wartungsvorgangs bei Fälligkeit der jeweiligen Wartungsposition pro Monat. Letztere sind hypothetisch, da in der Praxis nicht immer bei Fälligkeit einer Wartungsposition sofort eine Werkstatt aufgesucht werden kann.

Die Fig. 13 und 14 zeigen Bildschirmdarstellungen der Resultate der durch Iteration gewonnenen Optimierung über die Monate hinweg aufgetragen, wobei sich die beiden Darstellungen in ihrer Zeitskala unterscheiden. Diese Darstellungen sind als Entscheidungshilfe zur Einstellung eines geeigneten minimalen Wartungsabstands hilfreich. Bei Vergrößerung des minimalen Wartungsabstandes kann der Fall eintreten, dass gewisse Wartungspositionen den Folgewartungszeitpunkt nicht mehr erreichen. Sie werden folglich vorgezogen, und die damit verbundenen Verluste führen zu einem Sprung in der Kostenkurve der optimalen Lösung. Suboptimale Wartungsabstände sind somit als lokale Minimas der Kostenkurve zu erkennen und liegen bevorzugt vor den erwähnten sprungartigen Stufen der Kostenkurve. Der optimale Wartungsabstand ist das absolute Minimum der Kostenkurve.

In der Verwendung im Fahrzeug ist das beschriebene Verfahren flexibel auslegbar, von kleinen Lösungen mit wenigen Wartungspositionen und einfachen Modellen, wie linearer und durch das Fahrerprofil beeinflusster Abnutzung, bis zu großen Lösungen mit vierzig und mehr Wartungspositionen und entsprechend großen Modellen mit Lastkollektiven und integrierter Sensorik. Es ist auch möglich, stets alle Wartungspositionen implementiert zu haben und nur die jeweils relevanten durch Ankreuzen in den Bildschirmdarstellungen gemäß den Fig. 9 bis 14 für die Listen freizuschalten. Für ein bestimmtes Fahrzeug eingegebene Wartungspositionen sind problemlos auf andere-Fahrzeuge gleichen Typs übertragbar. Mit Hilfe der Editoren der graphischen Bedienoberflächen können auch leicht Varianten für ähnliche Fahrzeugtypen erstellt werden. Dem Systemnutzer wird im Fahrzeug eine vereinfachte, sehr übersichtliche und damit komfortable Anzeigeoberfläche zur Verfügung gestellt, über welche die ermittelten optimalen Wartungszeitpunkte und der Umfang des jeweiligen Wartungsvorgangs zu seiner Auswahl angezeigt werden.

Bevorzugt wird ein Ansatz gewählt, bei dem Gesamt-Standkosten einmalig pro Wartung und auch pro Ausfallzeiteinheit aufsummiert über die Wartungsdauer berücksichtigt werden, durch das Vorrücken einer Position im Zuge der Optimierung Geld verschenkt und dies im Optimierungs-Algorithmus berücksichtigt wird und die Kosten eines Wartungspaketes aus den Kosten der einzelnen Wartungspositionen errechnet werden, wobei berücksichtigt wird, dass die Kombination von Wartungspositionen durch Elimination von Mehrfach-Arbeitsschritten Kostenersparnisse ergeben kann, die das Vorrücken einer Position teilweise kompensieren. Daraus folgt dann, dass die Summe aus Kostenersparnis durch Kombination von Wartungspositionen pro Zeiteinheit (negativer Wert) einerseits und Gesamt-Standkosten pro Zeiteinheit plus verschenktem Geld durch Vorrücken von Wartungspositionen pro Zeiteinheit andererseits unter der Randbedingung eines vorgegebenen Mindestabstands zwischen zwei Wartungsterminen die das Optimum bestimmende Größe ist. Iteriert man über den vorgegebenen Mindestabstand zwischen zwei Wartungsterminen (z.B. in Monatsabständen), so ergibt sich eine Karte der Kosten pro Zeiteinheit aufgetragen gegen den Mindestabstand, deren Minimum jeweils den kostenoptimalen Zeitpunkt und Umfang von Wartungstermin, Folgewartungstermin, Wartungsumfang und Folgewartungsumfang darstellt. Dabei kann zur Kostenfunktion noch die zum aktuellen Zeitpunkt konstante Größe: Summe über "Kosten pro Wartungsposition/Zeit" addiert werden.

Die obige Beschreibung eines vorteilhaften Ausführungsbeispiels macht deutlich, dass sich das erfindungsgemäße Verfahren auf der Basis der Überwachung einzelner, dem Verschleiß unterworfener Systemkomponenten in vorteilhafter Weise dafür eignet, für ein zu wartendes System den optimalen Wartungszeitpunkt und den jeweiligen Umfang der Wartungsvorgänge im voraus unter Verwendung eines Optimierungsprozesses festzulegen, wobei der Systemnutzer unter Nutzung suboptimaler Lösungen in die Wahl einer mehr kostenorientierten oder mehr zeitorientierten Optimierung durch manuelle Korrektur einbezogen werden kann. Die Wartungskosten können auf individueller Basis errechnet werden. Über den Rahmenalgorithmus können die Systemkomponenten einzeln in diese Festlegung der Wartungsvorgänge einbezogen werden, so können unter anderem auch Verschleißmodelle berücksichtigt werden, die von Komponentenzulieferern bereitgestellt werden. Sonder-Wartungsvorgänge z.B. aufgrund gesetzlicher Vorschriften lassen sich berücksichtigen. Kostengewinne durch Kombination von Wartungspositionen werden im Optimierungsprozess mit Kostenverlusten durch Vorziehen von Wartungspositionen zur Wartungspaketbildung und mit Kostenverlusten durch Standzeitkosten verrechnet. Es versteht sich, dass sich das erfindungsgemäße Verfahren nicht nur zur Fahrzeugwartung eignet, sondern für die Wartung eines jeden Systems, das einer regelmäßigen Wartung mit mehreren Wartungspositionen bedarf.

## Patentansprüche

1. Verfahren zur Festlegung von Zeitpunkt und Umfang von Wartungsvorgängen für ein System mit mehreren Wartungspositionen (W₁,...,Wₘ), bei dem
- mittels Sensoren der Verschleiß von zu wartenden Systemkomponenten ermittelt wird,
- für die Durchführung der den Systemkomponenten zugehörigen Wartungspositionen zugehörige Toleranzbereiche abhängig von dem aktuellen gemessenen Verschleiß vorgegeben werden und
- ein minimaler Wartungsabstand (aₘᵢₙ) zwischen einem jeweils anstehenden Wartungsvorgang und einem Folgewartungsvorgang vorgegeben wird,
**dadurch gekennzeichnet, dass**
- der Zeitpunkt (t_{f}) eines jeweiligen Folgewartungsvorgangs auf spätestens denjenigen Toleranzbereich-Endpunkt (E_{f}) prognostisch festgelegt wird, der als erster der Toleranzbereich-Endpunkte von wartungszeitpunktrelevanten Wartungspositionen unter Einhaltung des minimalen Wartungsabstandes (aₘᵢₙ) auf den Zeitpunkt (tₐ) eines vorhergehenden Wartungsvorgangs folgt, und
- als im anstehenden Wartungsvorgang durchzuführende Wartungspositionen mindestens diejenigen festgelegt werden, deren Toleranzbereich-Endpunkte vor dem prognostizierten Folgewartungszeitpunkt liegen.

2. Verfahren nach Anspruch 1, weiter
**dadurch gekennzeichnet, dass**
die Wartungspositionen (Wᵢ) aus jeweils einer oder mehreren Unterwartungspositionen (Uᵢ₁,...,Uᵢₖ) aufgebaut sind und beim Erstellen des Wartungsablaufs für einen jeweiligen Wartungsvorgang die Unterwartungspositionen der beteiligten Wartungspositionen auf Kombinierbarkeit geprüft werden.

3. Verfahren nach Anspruch 1 oder 2, weiter
**dadurch gekennzeichnet, dass**
zur Festlegung des Umfangs der Wartungsvorgänge ein Optimierungsalgorithmus durchgeführt wird, der ein testweises Vorziehen von Wartungspositionen von Folgewartungsvorgängen zu früheren Wartungsvorgängen unter der Nebenbedingung der Einhaltung des jeweils vorgegebenen minimalen Wartungsabstandes
(aₘᵢₙ) und mit dem Wartungskostenbetrag als zu optimierender Kostenfunktion beinhaltet.

## Claims

1. A process for determining the time and extent of maintenance procedures for a system having several maintenance positions (W₁, ..., Wₘ) in which
- the wear on system components to be maintained is determined by means of sensors.
- appropriate tolerance ranges for the actioning of the maintenance positions relating to the system components are pre-set dependent on the wear measured at a given moment in time and
- a minimum maintenance interval (aₘᵢₙ) between a forthcoming maintenance procedure and the subsequent maintenance procedure is pre-set,
**characterised in that**
- the time (t_{f}) of a given subsequent maintenance procedure is determined by prognosis at no later than the first tolerance range end point (E_{f}) of the tolerance range end points of maintenance time-relevant maintenance positions following the time (tₐ) of a preceding maintenance procedure, while respecting the minimum maintenance interval (aₘᵢₙ), and
- the maintenance positions set to be actioned in the forthcoming maintenance procedure are at least those with tolerance range end points prior to the prognosticated subsequent maintenance time.

2. A process in accordance with claim 1, further
**characterised in that**
the maintenance positions (Wᵢ) each comprise one or more sub-maintenance positions (Uᵢ₁, ..., Uᵢₖ), and when the maintenance sequence for a particular maintenance procedure is set the sub-maintenance positions of the maintenance positions in question are checked for combinability.

3. A process in accordance with claim 1 or 2, further
**characterised in that**
in order to determine the extent of the maintenance procedures, an optimisation algorithm which consists of advancing maintenance positions on a test basis from subsequent maintenance procedures to earlier maintenance positions subject, to the additional condition that the pre-set minimum maintenance interval (aₘᵢₙ) be respected in each case and be included with the maintenance cost contribution as a cost function to be optimised

## Revendications

1. Procédé permettant de déterminer le moment et l'étendue d'interventions d'entretien pour un système comprenant plusieurs postes d'entretien (W₁, ..., Wₘ), dans lequel :
- on détermine, à l'aide de capteurs, l'usure de composants du système à entretenir,
- on spécifie des plages de tolérance associées, en fonction de l'usure réelle mesurée, pour la mise en oeuvre des postes d'entretien associés aux composants du système, et
- on spécifie un intervalle d'entretien minimum (aₘᵢₙ) entre une intervention d'entretien respectivement en attente et une intervention d'entretien suivante,
**caractérisé en ce que**
- on fixe le moment (t_{f}) d'une intervention d'entretien suivante respective, de manière prévisionnelle, au plus tard au point limite (E_{f}) de la plage de tolérance qui, en tant que premier des points limites de la plage de tolérance concernant des postes d'entretien importants pour le moment de l'entretien, en respectant l'intervalle d'entretien minimum (aₘᵢₙ), suit le moment (tₐ) d'une intervention d'entretien précédente, et
- on fixe comme postes d'entretien à exécuter dans l'intervention d'entretien en attente, au moins ceux dont les points limites de la plage de tolérance se situent avant le moment d'entretien suivant fixé de manière prévisionnelle.

2. Procédé selon la revendication 1, **caractérisé en outre par le fait que** les postes d'entretien (Wᵢ) sont constitués, à chaque fois, d'un ou de plusieurs postes d'entretien intermédiaires (Uᵢ₁, ..., Uᵢₖ) et que, lors de l'établissement du déroulement de l'entretien pour une intervention d'entretien respective, les postes d'entretien intermédiaires des postes d'entretien concernés sont vérifiés sur la possibilité de les combiner.

3. Procédé selon la revendication 1 ou 2, **caractérisé en outre par le fait que** pour fixer l'étendue des interventions d'entretien, on réalise un algorithme d'optimisation qui comprend une anticipation, fondée sur des tests, de postes d'entretien concernant des interventions d'entretien suivantes, par rapport à des interventions d'entretien antérieures, suivant la condition annexe du respect de l'intervalle d'entretien minimum (aₘᵢₙ) prédéfini à chaque fois, et avec le montant du coût d'entretien comme fonction de coût à optimiser.
